# EUROPEAN PATENT APPLICATION

(11) **EP 2 871 011 A1**
(43) Date of publication of application: **13.05.2015**
(21) Application number: 14188488.2
(22) Date of filing: 10.10.2014
(51) Int. Cl.: B23B 29/03

(54) **Tool holder unit for portable machine tools.**

(30) Priority: 30.10.2013 IT BO20130123 U
(71) Applicant: SIR MECCANICA S.p.A., 88100 Catanzaro (IT)
(72) Inventor: Siracusa, Rinaldo, 88100 CATANZARO (IT)
(74) Representative: Firmati, Leonardo

(57) **Abstract**

Described is a tool holder unit for portable machine tools kits equipped with a shaft (2) rotating about a respective axis (A), comprising a first body (3) for supporting a machine tool (4), having a central recess with a semi-circular extension shaped to match the shaft (2), a second body (6) for locking the first body (3) to the rotary shaft (2), the second body (6) also having a central recess with a semi-circular extension shaped to match the shaft (2).

## Description

This invention relates to tool holder unit for portable machine tools.

Portable machine tools are normally used for machining mechanical parts which are immovable or difficult to transport or also mechanical parts which are difficult to access with a traditional machine tool. In these and other cases there is therefore the need to provide, for example, portable drilling machines, which can be easily adapted to the particular needs which arise each time.

If, therefore, the portable machine tools are necessarily adaptable to a wide range of situations which can arise, the same cannot be said for the tool holder units installed on them, which are of a traditional type.

The traditional tool holder units, precisely because they are designed for substantially ordinary types of machining, are sometimes not very suitable for the necessary qualities of versatility and fast configuration of a portable machine tool.

More specifically, a drawback connected with the use of traditional tool holder units is the complexity of mounting them on the rotary shaft of the portable machine tool.

A further drawback connected with the use of traditional tool holder units is the difficulty of quickly obtaining stable positioning of the tool relative to the machine.

The aim of this invention is to provide a tool holder unit for portable machine tools which is free of the above mentioned drawbacks.

More specifically, the aim of this invention is to provide a tool holder unit for portable machine tools which is easy and practical to use.

A further aim of this invention is to provide a tool holder unit for machine tools which allows fast fitting and removal operations.

The above-mentioned aims are substantially achieved by a tool holder unit for portable machine tools comprising the technical features described in one or more of the appended claims.

Further features and advantages of this invention are more apparent in the non-limiting description below, with reference to a preferred, non-limiting, embodiment of a tool holder unit for portable machine tools as illustrated in the accompanying drawings, in which:
- Figure 1 is a schematic perspective view of a first embodiment of the tool holder unit according to this invention;
- Figure 2 is a schematic perspective view of a second embodiment of the tool holder unit according to this invention;
- Figure 3 is a schematic perspective view of the tool holder unit of Figure 1, in an assembled configuration.
- Figure 4 is an exploded view of the tool holder unit of Figure 1;
- Figure 5 is an exploded view of the tool holder unit of Figure 2.

In the accompanying drawings, the reference numerals 1,1' denote in their entirety two embodiments of the tool holder unit for portable machine tools kits according to this invention.

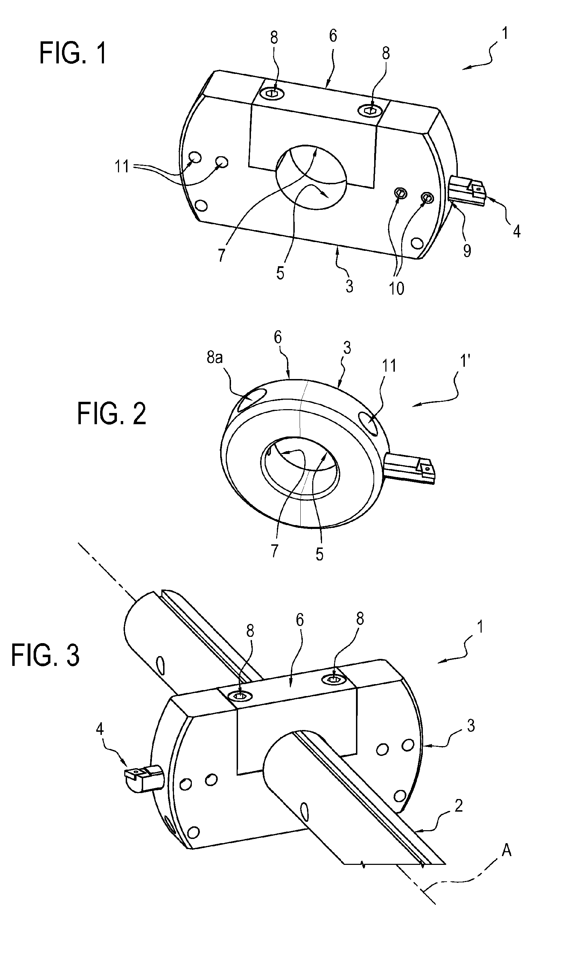

The portable machine tools, not illustrated, normally have a rotary shaft 2, shown in Figure 3, driven by respective motor means also not illustrated, the tool holder unit 1 according to this invention being mounted on the shaft 2.

The rotary shaft 2 has a relative axis of rotation A.

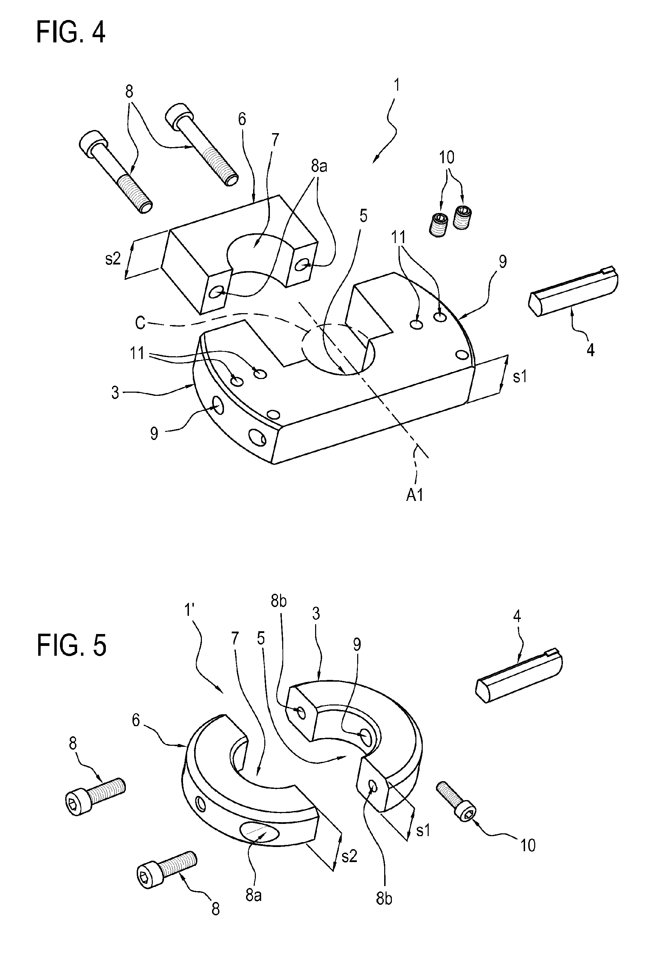

As illustrated in Figures 1 and 4 which refer to a first embodiment of the tool holder unit according to this invention, the unit 1 comprises a first body 3 for supporting a machine tool 4.

The first body 3 has a central recess 5 with a semi-circular extension.

The central recess 5 is shaped to match the shaft 2, meaning that the semi-circular extension of the recess 5 substantially reproduces a portion of the circle with which any transversal section of the shaft 2 is inscribed. Again with reference to Figures 1 and 4, the tool holder unit 1 comprises a second body 6 for locking the first body 3 to the rotary shaft 2. The second body 6 also has a respective central recess 7 with a semi-circular extension shaped to match the rotary shaft 2, in the terms mentioned above.

The second body 6 has a substantially parallelepiped shape and a recess of the corresponding shape is made on the first body 3.

The second body 6 is secured stably to the first body 3 by two screws 8 inserted in two respective through holes 8a, made in the second body 6. The screws 8 are designed to engage by screwing in the same number of threaded holes made in the first body 3.

As clearly illustrated in Figure 3, the screws 8 also stably secure the first and second bodies 3, 6 on the shaft 2, to prevent sliding and rotation relative to the shaft 2.

In other words, by the relative tightening of the first and second body 3, 6 on the shaft 2, a shaft-hub coupling is achieved of the friction type.

With reference to Figures 1 and 4, the tool holder unit 1 has, advantageously, two housings 9 for a machine tool 4 and respective locking screws 10, to stably lock the tool 4 inside the housing 9.

The screws 10 engage by screwing in respective threaded holes 11 which at least partly lead inside the housing 9, so as to allow the interference between the screws 10 and the tool 4 inserted in the housing 9.

The presence of two separate housings 9, positioned on diametrically opposite sides of the semi-circular central recess 5 advantageously allows the usability of the unit 1 to be increased, making it possible, for example, to install the tool 4 in the position more easily reachable by the operator, amongst those available.

Advantageously, moreover, the two housings 9 have diameters different to each other, for receiving tools having stems of different diameters.

Advantageously, to allow optimum balancing of the tool holder unit 1 during its operational use, the first body 3 has an axis A1 of symmetry passing through the centre of a circle C defining the profile of the central recess 5 with a semi-circular extension.

The two above-mentioned clamping screws 8 are advantageously positioned on opposite sides of the axis A1 of symmetry.

For the purpose of a correct and stable positioning of the tool holder unit 1 on the rotary shaft 2, the thickness s1 of the first body 3 measured in the direction of the axis A of rotation of the shaft 2 is at least equal to the radius, not shown in the accompanying drawings, of the shaft 2. Advantageously, the thickness s1 of the first body 3 in the direction of the axis A of the rotary shaft 2 is less than or equal to the diameter, not illustrated, of the shaft 2.

The thickness s2 of the second body 6 is advantageously equal to that s1 of the first body 3.

The term thickness, applied to the first body 3 and the second body 6 means, in this description, the thickness of the bodies at the respective central recesses 5, 7; the thicknesses s1, s2, are therefore respective indices of the amplitude of the cylindrical surface of the bodies 3, 6 in contact with the shaft 2.

Figures 2 and 5 illustrate a second embodiment of the tool holder unit according to this invention.

The embodiment illustrated in Figures 2 and 5 is indicated for clarity with the reference numeral 1', whilst the other elements in common with the unit 1 described above are still denoted by the same reference characters already used above.

The tool holder unit 1' comprises a first body 3 supporting a machine tool 4, the first body 3 having a central recess 5 with a semi-circular extension. The central recess 5 is shaped to match the shaft 2.

The tool holder unit 1' comprises a second body 6 for locking the first body 3 to the rotary shaft 2. The second body 6 also has a respective central recess 7 with a semi-circular extension shaped to match the rotary shaft 2. As shown in Figure 2, the tool holder unit 1' has a substantially ring-like shape, where the first and the second body 3, 6 each constitute a respective half of the ring.

The second body 6 is secured stably to the first body 3 by two screws 8 inserted in two respective through holes 8a, made in the second body 6 and designed to be engaged by screwing in the same number of threaded holes 8b made in the first body 3.

Similarly to what is illustrated in Figure 3 with reference to the first embodiment, also in the case of the unit 1' the screws 8 also stably secure the first and second bodies 3, 6 on the shaft 2, to prevent sliding and rotation relative to the shaft 2.

That is, also in this case, by the relative tightening of the first and second body 3, 6 on the shaft 2, a shaft-hub coupling is achieved of the friction type.

With reference to Figures 2 and 5, the tool holder unit 1' has, advantageously, a housing 9 for a machine tool 4 and respective locking screw 10, to stably lock the tool 4 inside the housing 9.

The screw 10 engages by screwing in a respective threaded hole, shown only in Figure 2, which at least partly leads inside the housing 9, so as to allow the interference between the screw 10 and the tool 4 inserted in the housing 9.

The annular shape of the tool holder unit 1' is optimum for the purpose of balancing it during operational use.

For the purpose of a correct and stable positioning of the tool holder unit 1' on the rotary shaft 2, the thickness s1 of the first body 3 measured in the direction of the axis A of rotation of the shaft 2 is at least equal to the radius, not shown in the accompanying drawings, of the shaft 2. Advantageously, the thickness s1 of the first body 3 in the direction of the axis A of the rotary shaft 2 is less than the diameter, not illustrated, of the shaft 2.

The thickness s2 of the second body 6 is advantageously equal to that s1 of the first body 3.

The meaning of the term thickness is as already described above with reference to the first embodiment consisting of the tool holder unit 1.

The invention brings important advantages and achieves the preset aims. The tool holder unit 1,1' according to this invention makes it possible to actuate a simple clamping technique which increases the fixing moments on the shaft which thus guarantees cutting efficiency and precision.

The tool holder unit 1,1' according to this invention also achieves a double contact, removable/adjustable coupling to obtain an optimum clamping and eliminate the tolerance and clearance errors resulting from wear.

The tool holder unit 1,1' according to this invention also achieves a stable positioning in an axial, radial and angular direction on the entire surface of the machine shaft for any operational configuration.

Unlike what occurs with the prior art devices, with the use of the unit 1,1' unit according to this invention it will no longer be necessary to position the tool in one of the holes made in series on the rotary shaft.

Lastly, the tool holder unit 1,1' according to this invention allows the fast locking and releasing of the tool, which therefore eliminates the risks of any onerous misalignments in the working zone during the steps for tool changing and positioning, thereby considerably improving the safety for the employees who are manually operating in works spaces which are often restricted and hazardous.

## Claims

1. A tool holder unit for portable machine tools equipped with a shaft (2) rotating about a respective axis (A), **characterised in that** it comprises:
- a first body (3) for supporting a machine tool (4), having a central recess (5) with a semi-circular extension shaped to match the shaft (2),
- a second body (6) for locking the first body (3) to the rotary shaft (2), the second body (6) having a central recess (7) with a semi-circular extension shaped to match the shaft (2),
- screw clamping means (8) for engaging together the first body (3) and the second body (6) positioned around the shaft (2) for stably securing the first body (3) and the second body (6) on the shaft (2) to prevent sliding and rotating relative to the shaft (2).

2. The tool holder unit according to claim 1, **characterised in that** the first body (3) has at least one housing (9) for a machine tool (4) and screw locking means (10) for stably securing the tool (4) inside the housing (9).

3. The tool holder unit according to claim 2, **characterised in that** the first body (3) has two housings (9) for housing a respective tool (4), the housings (9) being positioned on diametrically opposite sides of the semi-circular central recess (5).

4. The tool holder unit according to any one of claims 1 to 3, **characterised in that** the first body (3) has an axis (A1) of symmetry passing through the centre of a circle (C) defining the profile of the central recess (5) with a semi-circular extension

5. The tool holder unit according to claim 1, **characterised in that** the screw clamping means (8) comprise two screws positioned on opposite sides of the axis (A1) of symmetry.

6. The tool holder unit according to any one of claims 1 to 5, **characterised in that** the thickness (s1) of the first body (3) in the direction of the axis (A) of the rotary shaft (2) is at least equal to the radius of the shaft (2).

7. The tool holder unit according to any one of claims 1 to 6, **characterised in that** the thickness (s1) of the first body (3) in the direction of the axis (A) of the rotary shaft (2) is roughly equal to the diameter of the shaft (2).

8. The tool holder unit according to any one of claims 1 to 6, **characterised in that** the thickness (s1) of the first body (3) in the direction of the axis (A) of the rotary shaft (2) is less than the diameter of the shaft (2).
